# EUROPEAN PATENT SPECIFICATION

(11) **EP 4 500 832 B1**
(45) Date of publication and mention of the grant of the patent: **24.06.2026**
(21) Application number: 23715819.1
(22) Date of filing: 28.03.2023
(51) Int. Cl.: H04L 67/10

(54) **CONFIGURING TRAFFIC STEERING**
KONFIGURATION EINER VERKEHRSLENKUNG
CONFIGURATION D'ORIENTATION DE TRAFIC

(30) Priority: 29.03.2022 US 202263324814 P
(43) Date of publication of application: 05.02.2025
(73) Proprietor: Telefonaktiebolaget LM Ericsson (publ), 164 83 Stockholm (SE)
(72) Inventor: MIHÁLY, Attila, 2120 Dunakeszi (HU); OLSSON, Magnus, London Greater London SW19 5JP (GB); HALLENSTÅL, Magnus, 187 50 Täby (SE); MAS ROSIQUE, Maria, Luisa, 28760 Tres Cantos (ES); BACKMAN, Jan, 442 71 Kärna (SE)
(74) Representative: Ericsson
(86) International application number: PCT/EP2023/057962
(87) International publication number: WO 2023/186875

(56) References cited:
- US-A1- 2019 373 505
- US-A1- 2020 221 527
- "3rd Generation Partnership Project; Technical Specification Group Services and System Aspects; 5G System Enhancements for Edge Computing; Stage 2 (Release 17)", 23 March 2022 (2022-03-23), XP052159026, Retrieved from the Internet <URL:https://ftp.3gpp.org/tsg_sa/WG2_Arch/Latest_SA2_Specs/DRAFT_INTERIM/Archive/23548-h20_CRs_Implemented.zip 23548-h20_CRs_Implemented.docx> [retrieved on 20220323]

## Description

### TECHNICAL FIELD

This disclosure relates to methods and apparatus for configuring traffic steering. In particular supporting Edge Computing applications.

### BACKGROUND

Edge Computing (EC) enables an operator and 3rd party services to be hosted close to a user equipment (UE)'s access point of attachment, in order to achieve an efficient service delivery through reduced end-to-end latency and reduced load on the transport network.

In EC deployment, an application service may be served by multiple Edge Application Servers (EASs) typically deployed in different sites. These multiple EASs that host a service may use a single IP address (anycast address) or different IP addresses. To start an Edge Application Service, the UE needs to know the IP address(es) of the Application Server(s) serving the Service.

The UE may perform a discovery to get the IP address(es) of a suitable Edge Application Server (e.g., the closest one) so that the traffic can be locally routed to the Edge Application Server, and as a result, service latency, traffic routing path, and user service experience can be optimized. The 3rd Generation Partnership Project (3GPP) Technical Specification (TS) 23.548 V17.2.0 defines a (re-)discovery procedure involving 5G Core (5GC) that provides a translation of the Fully Qualified Domain Name (FQDN) of an EAS into the address of an EAS as topologically close as possible to the UE using the Domain Name System (DNS) and, in parallel, also setting up the UP connectivity to the selected EAS if needed.

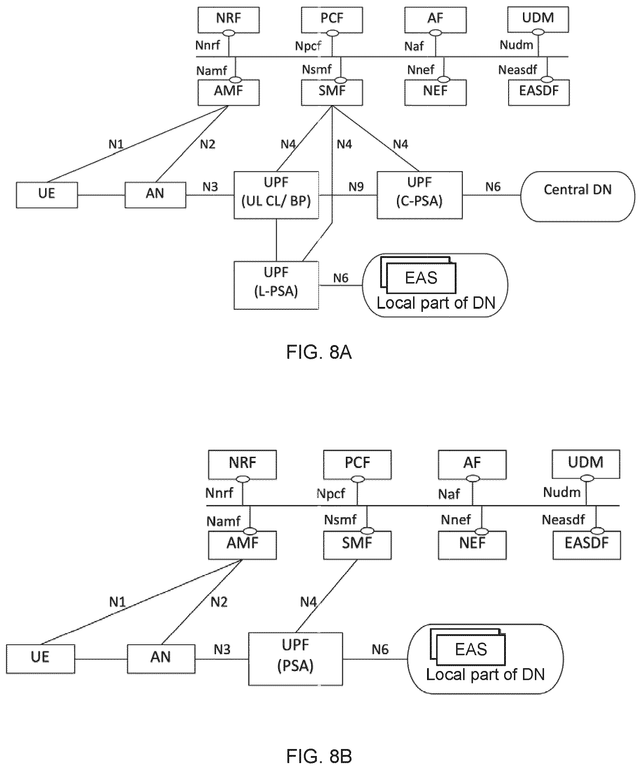

FIG. 8A shows a 5G System (5G) architecture for non-roaming scenario supporting EC with Uplink (UL) Classifier (CL)/Branching Point (BP). FIG. 8B shows a 5GS architecture for non-roaming scenario supporting EC without UL CL/BP.

In 5GC, various network functions are involved. Some of the network functions are explained below.

SMF (Session Management Function): SMF is responsible for session establishment, modification, and release, including selection and control of User Plan Function (UPF) entities, maintaining the topology of the involved Protocol Data Unit (PDU) Session Anchor (PSA) UPFs, establishing and releasing the tunnel between AN and UPF and the tunnel between UPFs. SMF may also configure traffic forwarding at UPF. SMF interacts with the UPF over N4 Reference point using Packet Forwarding Control Protocol (PFCP) procedures.

UPF (User Plane Function): UPF handles the user data traffic. Among other, it provides the external PDU session point of interconnect to Data Network (PSA) and performs packet routing and forwarding (e.g., support of Uplink classifier (UL CL) to route traffic flows to an instance of a data network, support of Branching point to support multi-homed PDU Session).

PCF (Policy Control Function): PCF supports a unified policy framework to govern the network behavior. Specifically, the PCF may provide Policy and Charging Control (PCC) rules to the Policy and Charging Enforcement Function (PCEF), i.e., the SMF/UPF that enforces policy and charging decisions according to provisioned PCC rules.

### EASDF (Edge Application Server Discovery Function):

To support the Edge Application Server (EAS) discovery procedure, an Edge Application Server Discovery Function (EASDF) is introduced. EASDF implements (among others) handling the DNS messages according to the instruction from the SMF, including: receiving DNS message handling rules from SMF, exchanging DNS messages from the UE, forwarding DNS messages to C-DNS or L-DNS for DNS query, adding Extension Mechanisms for DNS (EDNS) Client Subnet (ECS) option (as defined in Internet Engineering Task Force (IETF) RFC 7871) into DNS query for an FQDN, notifying EASDF related information to SMF, or terminates the DNS security, if DNS over Transport Layer Security (DoT), DNS over Hypertext Transfer Protocol Secure (HTTPS) (DoH) or DNS over Datagram Transport Layer Security (DTLS) is used.

The EASDF has user plane connectivity with the PSA UPF over N6 for the transmission of DNS signaling exchanged with the UE. If the UE applications want to discover/access EAS by using the mechanisms defined in the TS, the DNS queries generated by the UE shall be sent to the EASDF as DNS resolver indicated by the SMF.

It is possible for the 5G Core network to install multiaccess access policy rules, called Access Traffic Steering, Switching and Split (ATSSS) rules, for a 5G-Residential Gateway (RG) (or for a UE) to steer a given traffic flow across fixed and cellular access. This allows convergent operators to support existing fixed hybrid access use cases, e.g., top up a given fixed broadband service on cellular, without the need of external Hybrid Access Gateway (HAGs) and integrating 5G-RG steering decisions with the policy management with the 5G Core PCF.

An ATSSS capable 5G-RG (or UE) can establish a Multiaccess (MA) PDU session where the SMF (based on PCC rules received from PCF) sends ATSSS rules to the 5G-RG to control the traffic steering, switching and splitting of the uplink traffic for different traffic flows carried in such PDU session. The table below (from 3GPP TS 23.501 v17.3.0, clause 5.32.8) shows the format of a ATSSS rule:

| Information name | Description | Category | SMF permitted to modify in a PDU context | Scope |
|---|---|---|---|---|
| Rule identifier | Unique identifier to identify the ATSSS Rule | Mandatory | No | PDU context |
| Rule Precedence | Determines the order in which the ATSSS rule is evaluated in the UE. | Mandatory (NOTE 1) | Yes | PDU context |
| Traffic Descriptor | *This part defines the Traffic descriptor components for the ATSSS rule.* | Mandatory (NOTE 2) | | |
| Application descriptors | One or more application identities that identify the application(s) generating the traffic (NOTE 3). | Optional | Yes | PDU context |
| IP descriptors (NOTE 4) | One or more 5-tuples that identify the destination of IP traffic. | Optional | Yes | PDU context |
| Non-IP descriptors (NOTE 4) | One or more descriptors that identify the destination of non-IP traffic, i.e. of Ethernet traffic. | Optional | Yes | PDU context |
| Access Selection Descriptor | *This part defines the Access Selection Descriptor components for the ATSSS rule.* | Mandatory | | |
| Steering Mode | Identifies the steering mode that should be applied for the matching traffic and associated parameters. | Mandatory | Yes | PDU context |
| Steering Mode Indicator | Indicates either autonomous load-balance operation or UE-assistance operation if steering mode is set to "Load Balancing". | Optional (NOTE 6) | Yes | PDU context |
| Threshold Values | A Maximum RTT and/or a Maximum Packet Loss Rate. | Optional (NOTE 6) | Yes | PDU context |
| Steering Functionality | Identifies whether the MPTCP functionality or the ATSSS-LL functionality should be applied for the matching traffic. | Optional (NOTE 5) | Yes | PDU context |
| NOTE 1: Each ATSSS rule has a different precedence value from the other ATSSS rules. | | | | |
| NOTE 2: At least one of the Traffic Descriptor components is present. | | | | |
| NOTE 3: An application identity consists of an OSId and an OSAppId. | | | | |
| NOTE 4: An ATSSS rule cannot contain both IP descriptors and Non-IP descriptors. | | | | |
| NOTE 5: If the UE supports only one Steering Functionality, this component is omitted. | | | | |
| NOTE 6: The Steering Mode Indicator and the Threshold Values shall not be provided together. | | | | |

The above information provided in the Background section of this disclosure is for informational purpose only, and is not an admission of prior art.

### SUMMARY

A UE may switch from using a 3GPP access to a non-3GPP access, or vice versa. However, there may be a scenario where specific function(s) are enabled only for a particular type of access. For example, EC may be enabled only for 3GPP access (i.e., EC is not enabled for non-3GPP access). In such scenario, if a UE switches from using a 3GPP access to a non-3GPP access for a network session, EC would not be enabled for the network session, and thus the service/operational improvements provided by EC will not be achieved for the network session. A UE or EC application may be configured to control and decide whether and/or under which condition a non-3GPP access can be allowed for a particular traffic or a particular application but configuring a UE or EC application to perform such control and make such decision may require a complex application functionality which may not always be implemented. Furthermore, even though UE Route Selection Policy (URSP) and ATSSS rules provide means for the network to control steering of application traffic to the non-3GPP access, there may be a scenario where a UE or a 5GC lacks URSP or ATSSS-capability (resulting in a UE to switch to non-integrated non-3GPP access where reconnecting to the 5GS is not supported), the ATSSS capability have issues with Session breakout, or URSP/ATSSS rules are not applied properly due to, for example, dynamic policy changes in the network.

Thus, there is a need for a way to selectively control traffic steering. More specifically, there is a need for a way to indicate to a UE how to handle certain traffic.

Accordingly, in one aspect of the embodiments of this disclosure, there is provided a method. The method comprises receiving a triggering message; and based at least on receiving the triggering message, transmitting towards a user equipment, UE, a message related to a Protocol Data Unit, PDU, session. The message related to the PDU session indicates any one or more of the followings: i) that a particular functionality is applied to a part of traffic or all traffic in the PDU session; ii) that 3rd Generation Partnership Project, 3GPP, access is needed for using a particular application or all applications mapped into the PDU session; iii) that a reconnection to 5G System, 5GS, is needed for using a particular application or all applications mapped into the PDU session; or iv) that non-3GPP access is allowed for using a particular application or all applications mapped into the PDU session only if one or more conditions are satisfied.

In another aspect, there is provided a method. The method comprises receiving a message related to a Protocol Data Unit, PDU, session; analyzing the message related to the PDU session; and retrieving from the message related to the PDU session an indication which indicates any one or more of the followings: i) that a particular functionality is applied to a part of traffic or all traffic in the PDU session; ii) that a 3rd Generation Partnership Project, 3GPP, access is needed for using a particular application or all applications mapped into the PDU session; iii) that a reconnection to 5G System, 5GS, is needed for using a particular application or all applications mapped into the PDU session; or iv) that a particular non-3GPP access or all non-3GPP accesses are allowed for using a particular application or all applications mapped into the PDU session only if one or more conditions are satisfied.

In another aspect, there is provided a computer program comprising instructions which when executed by processing circuitry cause the processing circuitry to perform the method of any one of the embodiments described above.

In another aspect, there is provided an apparatus. The apparatus is configured to receive a triggering message; and based at least on receiving the triggering message, transmit towards a user equipment, UE, a message related to a Protocol Data Unit, PDU, session. The message related to the PDU session indicates any one or more of the followings: i) that a particular functionality is applied to a part of traffic or all traffic in the PDU session; ii) that 3rd Generation Partnership Project, 3GPP, access is needed for using a particular application or all applications mapped into the PDU session; iii) that a reconnection to 5G System, 5GS, is needed for using a particular application or all applications mapped into the PDU session; or iv) that non-3GPP access is allowed for using a particular application or all applications mapped into the PDU session only if one or more conditions are satisfied.

In another aspect, there is provided an apparatus. The apparatus is configured to receive a message related to a Protocol Data Unit, PDU, session; analyze the message related to the PDU session; and retrieve from the message related to the PDU session an indication which indicates any one or more of the followings: i) that a particular functionality is applied to a part of traffic or all traffic in the PDU session; ii) that a 3rd Generation Partnership Project, 3GPP, access is needed for using a particular application or all applications mapped into the PDU session; iii) that a reconnection to 5G System, 5GS, is needed for using a particular application or all applications mapped into the PDU session; or iv) that a particular non-3GPP access or all non-3GPP accesses are allowed for using a particular application or all applications mapped into the PDU session only if one or more conditions are satisfied.

In another aspect, there is provided an apparatus. The apparatus comprises a memory; and processing circuitry coupled to the memory, wherein the apparatus is configured to perform the method of any one of the embodiments described above.

By indicating to a UE how to handle certain traffic, thereby allowing the UE to change or maintain the type of network access it uses for a certain traffic or a certain application, a specific network functionality limited to a particular type of network access can be continuously provided.

### BRIEF DESCRIPTION OF THE DRAWINGS

The accompanying drawings, which are incorporated herein and form part of the specification, illustrate various embodiments.
FIG. 1 shows a system according to some embodiments.
FIG. 2 shows a message flow diagram according to some embodiments.
FIG. 3 shows a message flow diagram according to some embodiments.
FIG. 4 shows a process according to some embodiments.
FIG. 5 shows a process according to some embodiments.
FIG. 6 shows an apparatus according to some embodiments.
FIG. 7 shows an apparatus according to some embodiments.
FIG. 8A shows an exemplary 5GS architecture.
FIG. 8B shows an exemplary 5GS architecture.

### DETAILED DESCRIPTION

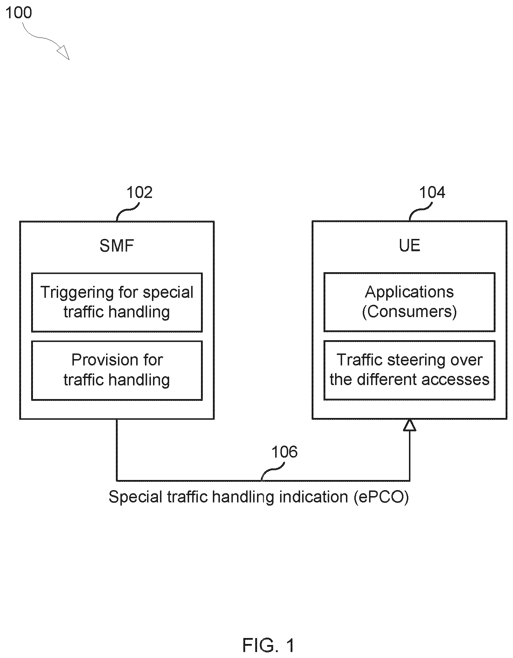

FIG. 1 shows a part of an exemplary system 100 for changing one or more configurations of traffic steering, according to some embodiments. System 100 includes a first system entity 102 and a second system entity 104.

In some embodiments, first system entity 102 is a Session Management Function (SMF) and second system entity 104 is a user equipment (UE). For simple explanation, first system entity 102 is referred as SMF 102 and second system entity 104 is referred as UE 104 for the rest of this disclosure. However, in some embodiments, first system entity 102 may be an entity other than SMF and second system entity 104 may be an entity other than UE.

SMF 102 may be configured to detect an occurrence of a triggering event. The triggering event may trigger SMF 102 to perform special traffic steering (i.e., changing one or more configuration(s) of traffic steering and steering traffic using the changed configuration(s)). The triggering event may be receiving a triggering message, and the triggering message may be any message triggering SMF 102 to perform special traffic steering. There may be various causes of triggering the transmission of the triggering message.

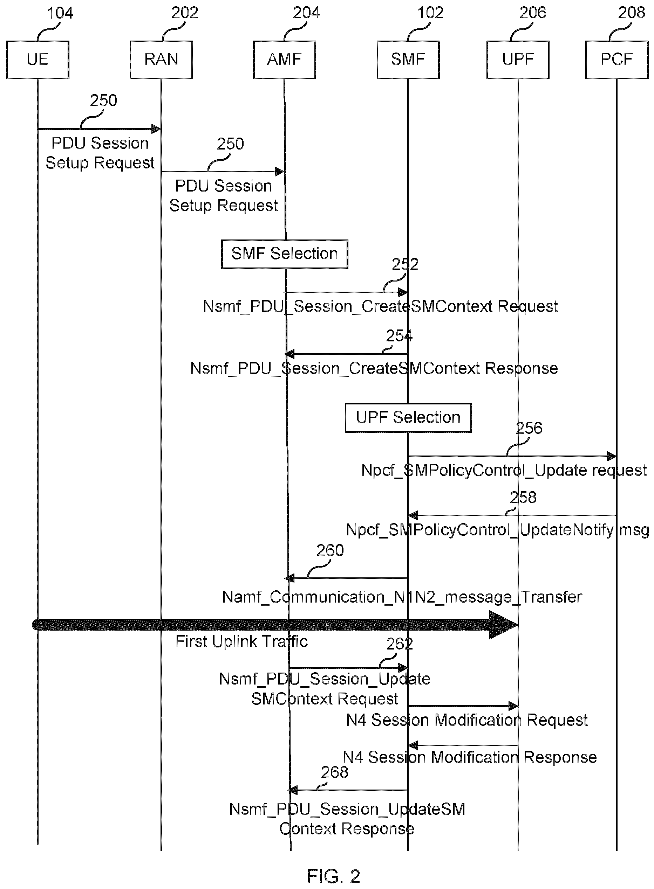

In one example, UE 104's transmission of a Protocol Data Unit (PDU) session setup request may trigger the transmission of the triggering message. More specifically, as shown in FIG. 2, during a PDU session process, UE 104 may transmit towards an Access and Mobility Management Function (AMF) 204 via Radio Access Network (RAN) 202 a PDU session setup request 250. After receiving PDU session setup request 250, AMF 204 may transmit towards SMF 102 Nsmf_PDU_Session_CreateSMContext Request 252. In this example, Nsmf_PDU_Session_CreateSMContext Request 252 may serve as the triggering message.

After first UL traffic is delivered to UPF, in some embodiments, AMF 204 may transmit towards SMF 102 Nsmf_PDU_Session_UpdateSMContext Request 262. Nsmf_PDU_Session_UpdateSMContext Request 262 may also serve as the triggering message. Even though, in FIG. 2, the session update request (e.g., Nsmf_PDU_Session_UpdateSMContext Request) is used in the session establishment sequence, in some embodiments, the session update request may be originated or triggered from UE 104 during the lifetime of the PDU session, and such session update request may also serve as the triggering message.

In another example, as shown in FIG. 2, SMF 102 may transmit towards PCF 208 a Npcf_SMPolicyControl_Update request 256. As a result of receiving Npcf_SMPolicyControl_Update request 256, PCF 208 may transmit towards SMF 102 a Npcf_SMPolicyControl_UpdateNotify message 258. In this example, Npcf_SMPolicyControl UpdateNotify message 258 may serve as the triggering message. In some embodiments, the transmission of Npcf_SMPolicyControl UpdateNotify message 258 from PCF 208 towards SMF 102 may not be triggered by the transmission of Npcf_SMPolicyControl_Update request 256. Rather, PCF 208 may initiate the transmission of Npcf_SMPolicyControl UpdateNotify message 258 based on a different trigger.

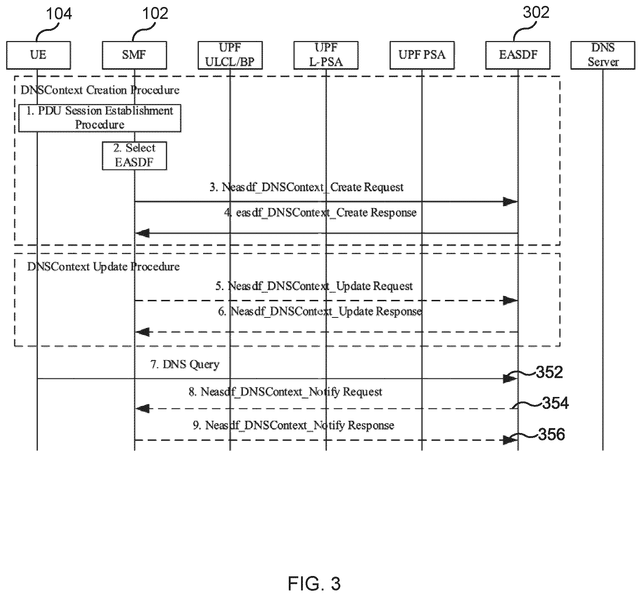

In further example, the triggering message may be one of the messages involved in a DNS related procedure. FIG. 3 shows steps involved the DNS related procedure. As shown in FIG. 3, UE 104 may transmit towards EASDF 302 a DNS query message 352. EASDF 208 may determine whether DNS query message 352 matches to a DNS message handling rule, and as a result of determining that DNS query message 352 matches to the DNS message handling rule, EASDF 302 may transmit towards SMF 102 a Neasdf_DNSContext_Notify request 354. In response to receiving the request 354, SMF 102 may respond with a Neasdf_DNSContext Notify response 356. Here, the Neasdf_DNSContext_Notify request 354 serve as the triggering message.

The above examples of the triggering message are defined in 3GPP TS. In some embodiments, the triggering message may comprise any one or more of the followings: i) a UE identifier identifying UE 104, ii) an IP address associated with UE 104, or (iii) a traffic descriptor associated with the UE.

After receiving the triggering message, in some embodiments, SMF 102 may analyze the triggering message and determine whether PDU session is a PDU session for Edge Computing (EC) related traffic.

As a result of determining that the PDU session is for EC related traffic, SMF 102 may transmit towards UE 104 a message 106 related to a PDU session. Message 106 may trigger a traffic steering. More specifically, message 106 may indicate how to steer a traffic (i.e., may indicate one or more configuration(s) of traffic steering). In some embodiments, message 106 is a message comprising the Extended Protocol Configuration Options (ePCO) Information Element (IE) which is defined in 3GPP TS 24.501. In case SMF 102 determines that the PDU session is not for EC related traffic, SMF 102 may not transmit message 106 towards UE 104.

In some embodiments, in addition to transmitting message 106 towards UE 104, after SMF 102 determines that the PDU session is for EC related traffic, SMF 102 may select an Edge UPF (local PSA) for the given traffic.

According to some embodiments, message 106 may indicate any one or more of the followings:
(1) that a network applies a particular functionality (e.g., providing a connectivity to the edge) to all or a part of traffic in the PDU session (in other words, the message 106 may include an "edge treatment" indicator);
(2) that 3rd Generation Partnership Project (3GPP) access is needed for using a particular application or all applications mapped into the PDU session, in order to guarantee the continuity and/or required performance of the application(s) (i.e., using a non-3GPP access should be avoided for using the application(s));
(3) All application(s) mapped into the PDU session should preferably use the 3GPP access;
(4) that a reconnection to 5G System (5GS) is needed for using a particular application or all applications mapped into the PDU session (in this case, SMF 102 may also provide tunnel information needed for re-connection (e.g., Proxy IP address and necessary credential(s)); or
(5) that using a non-3GPP access is allowed for using a particular application or all applications mapped in the PDU session only if one or more conditions are satisfied (in this case, SMF 102 may also provide rule(s) and/or condition(s) regarding the usage of non-3GPP access).

Examples of the "applications" include an automotive application, an Extended Reality (XR) or a Virtual Reality (VR) application, or a real-time streaming gaming application (such as Stadia^{™}).

In some embodiments, message 106 is any one of a
Nsmf_PDUSession_CreateSMContext response message 254, a
Nsmf_PDUSession_UpdateSMContext response message 268, or a
Namf_Communication_N1N2MessageTransfer request message 260.

The above examples of message 106 are defined in 3GPP TS. The above indications included in message 106 may be provided to UE 104 via various entities (e.g., RAN 202 and/or AMF 204). Upon obtaining the indications, UE 104 may perform any one or more of the following actions:
(1) Notifying any subscribed consumers (applications) mapped into the PDU session that EC related functionality is being applied to a part of the traffic or all traffic mapped into the PDU session (The applications may use this information to perform one or more action(s) to maintain proper connectivity to EC resources, such as keeping the 3GPP access active, monitoring the performance of the non-3GPP access, and/or taking traffic routing decisions);
(2) Prohibiting the usage of a particular type of non-3GPP access or any non-3GPP access for a particular application (which means that using the particular application requires using a 3GPP access);
(3) Prohibiting the usage of a particular type of non-3GPP access or any non-3GPP access for a given PDU session;
(4) Whenever a non-3GPP access becomes active, setting up a tunnel to a UPF through a virtual interface using the tunnel information provided by SMF 102 in a Protocol Configuration Option (PCO) message, and directing application/PDU session traffic (whether the traffic comes from the 3GPP access or the non-3GPP access) through this connection; or
(5) Monitoring the performance of non-3GPP access(es) through an established tunnel and allowing a specific traffic to go through the non-3GPP access(es) only if one or more conditions indicated by the network are satisfied. One example of said one or more conditions is that the maximum latency provided by the non-3GPP access(es) is less than a certain threshold. Another example of said one or more condition is that the minimum bandwidth provided by the non-3GPP access(es) is greater than or equal to a certain threshold value.

In some embodiments, SMF 102 may notify UE 104 that EC related functionality is not applied to the traffic for the given PDU session or the application. In response to receiving the notification, UE 104 may stop the traffic steering (which UE 104 started in response to obtaining the above discussed indication(s) from SMF 102.

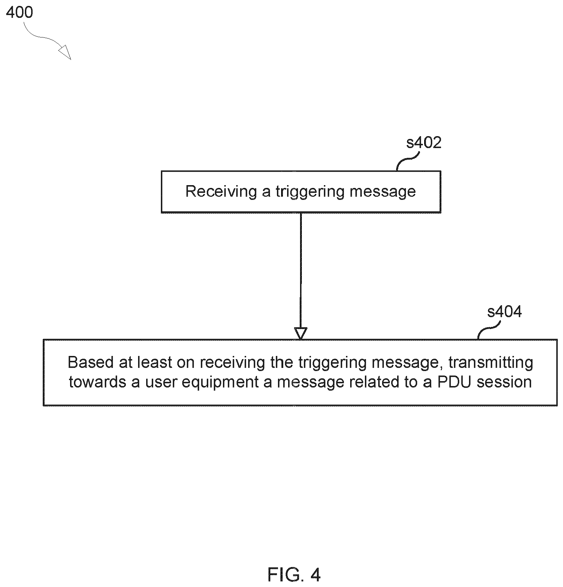

FIG. 4 shows a process 400 according to some embodiments. Process 400 may begin with step s402. Step s402 comprises receiving a triggering message. Step s404 comprises, based at least on receiving the triggering message, transmitting towards a user equipment, UE, a message related to a Protocol Data Unit, PDU, session. The message related to the PDU session indicates any one or more of the followings: i) that a particular functionality is applied to a part of traffic or all traffic in the PDU session; ii) that 3rd Generation Partnership Project, 3GPP, access is needed for using a particular application or all applications mapped into the PDU session; iii) that a reconnection to 5G System, 5GS, is needed for using a particular application or all applications mapped into the PDU session; or iv) that non-3GPP access is allowed for using a particular application or all applications mapped into the PDU session only if one or more conditions are satisfied.

In some embodiments, the method is performed by a Session Management Function, SMF.

In some embodiments, the triggering message is transmitted by either an Access and Mobility Management Function, AMF, or a Policy Control Function, PCF.

In some embodiments, the triggering message comprises any one or more of the followings: i) a UE identifier identifying the UE, ii) an IP address associated with the UE, or (iii) a traffic descriptor associated with the UE.

In some embodiments, the triggering message is any one of the following messages: i) a Nsmf_PDU_Session_CreateSMContext Request; ii) a Npcf_SMPolicyControl UpdateNotify message; iii) a Neasdf_DNSContext_Notify Request; or iv) a Nsmf_PDU_Session_UpdateSMContext Request.

In some embodiments, the method further comprises analyzing the triggering message; and based on analyzing the triggering message, determining that traffic in the PDU session is related to EC, wherein the transmission of the message related to the PDU session is based on the determination that traffic in the PDU session is related to EC.

In some embodiments, the method further comprises analyzing the triggering message; based on analyzing the triggering message, determining that traffic in the PDU session is related to EC; and as a result of determining that the traffic in the PDU session is related to EC, selecting an edge User Plan Function (UPF) for a given traffic.

In some embodiments, the message related to the PDU session comprises Extended Protocol Configuration Options, ePCO.

In some embodiments, the message related to the PDU session is transmitted towards an AMF.

In some embodiments, the message related to the PDU session is any one of the following messages: i) a Nsmf_PDUSession_CreateSMContext Response; ii) a Nsmf_PDUSession_UpdateSMContext Response; or iii) a Namf_Communication_N1N2MessageTransfer Request.

In some embodiments, the message related to the PDU session includes tunnel information needed for the re-connection.

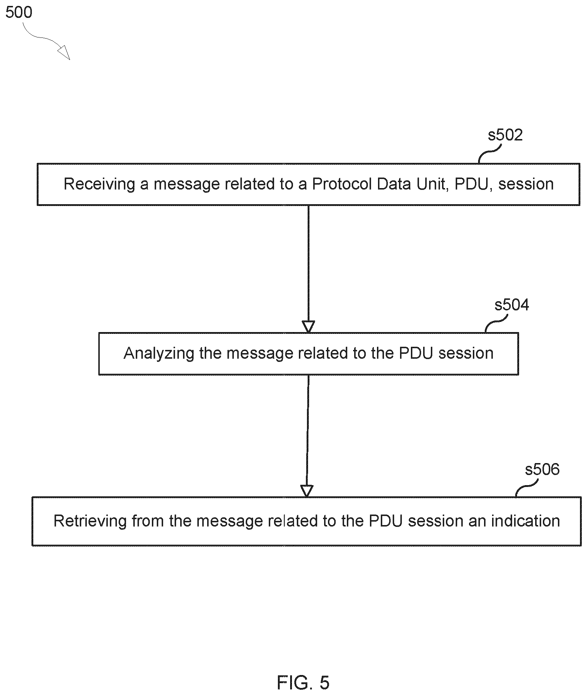

FIG. 5 shows a process 500 according to some embodiments. Process 500 may begin with step s502. Step s502 comprises receiving a message related to a Protocol Data Unit, PDU, session. Step s504 comprises analyzing the message related to the PDU session. Step s506 comprises retrieving from the message related to the PDU session an indication which indicates any one or more of the followings: i) that a particular functionality is applied to a part of traffic or all traffic in the PDU session; ii) that a 3rd Generation Partnership Project, 3GPP, access is needed for using a particular application or all applications mapped into the PDU session; iii) that a reconnection to 5G System, 5GS, is needed for using a particular application or all applications mapped into the PDU session; or iv) that a particular non-3GPP access or all non-3GPP accesses are allowed for using a particular application or all applications mapped into the PDU session only if one or more conditions are satisfied.

In some embodiments, the method is performed by a user equipment, UE.

In some embodiments, transmission of the message related to the PDU session is triggered by a Session Management Function, SMF.

In some embodiments, the message related to the PDU session comprises Extended Protocol Configuration Options, ePCO.

In some embodiments, the message related to the PDU session includes tunnel information needed for the re-connection.

In some embodiments, the method further comprises performing any one or more of the followings: (i) notifying any applications mapped into the PDU session that Edge Computing, EC, related functionality is applied to a part of the traffic or all traffic mapped into the PDU session; (ii) prohibiting usage of a particular non-3GPP access or any non-3GPP access for a particular application; (iii) prohibiting usage of a particular non-3GPP access or any non-3GPP access for a given PDU session; (iv) whenever a non-3GPP access becomes active, setting up a tunnel to a User Plane Function, UPF, and directing application/PDU session traffic through the tunnel; or (v) monitoring performance of a first non-3GPP access and allowing a specific traffic to go through the first non-3GPP access only if one or more conditions related to the first non-3GPP access are satisfied.

In some embodiments, said one or more conditions includes any one or more of the followings: i) that a maximum latency provided by the first non-3GPP access is less than a latency threshold value; or ii) that a minimum bandwidth provided by the first non-3GPP access is greater than or equal to a bandwidth threshold value.

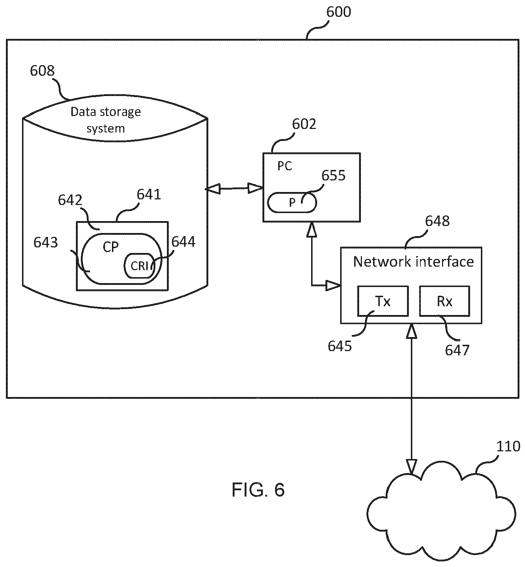

FIG. 6 is a block diagram of an apparatus 600, according to some embodiments, for implementing SMF 102. As shown in FIG. 6, apparatus 600 may comprise: processing circuitry (PC) 602, which may include one or more processors (P) 655 (e.g., a general purpose microprocessor and/or one or more other processors, such as an application specific integrated circuit (ASIC), field-programmable gate arrays (FPGAs), and the like), which processors may be co-located in a single housing or in a single data center or may be geographically distributed (i.e., apparatus 600 may be a distributed computing apparatus); a network interface 648 comprising a transmitter (Tx) 645 and a receiver (Rx) 647 for enabling apparatus 600 to transmit data to and receive data from other nodes connected to a network 110 (e.g., an Internet Protocol (IP) network) to which network interface 648 is connected (directly or indirectly) (e.g., network interface 648 may be wirelessly connected to the network 110, in which case network interface 648 is connected to an antenna arrangement); and a local storage unit (a.k.a., "data storage system") 608, which may include one or more non-volatile storage devices and/or one or more volatile storage devices. In embodiments where PC 602 includes a programmable processor, a computer program product (CPP) 641 may be provided. CPP 641 includes a computer readable medium (CRM) 642 storing a computer program (CP) 643 comprising computer readable instructions (CRI) 644. CRM 642 may be a non-transitory computer readable medium, such as, magnetic media (e.g., a hard disk), optical media, memory devices (e.g., random access memory, flash memory), and the like. In some embodiments, the CRI 644 of computer program 643 is configured such that when executed by PC 602, the CRI causes apparatus 600 to perform steps described herein (e.g., steps described herein with reference to the flow charts). In other embodiments, apparatus 600 may be configured to perform steps described herein without the need for code. That is, for example, PC 602 may consist merely of one or more ASICs. Hence, the features of the embodiments described herein may be implemented in hardware and/or software.

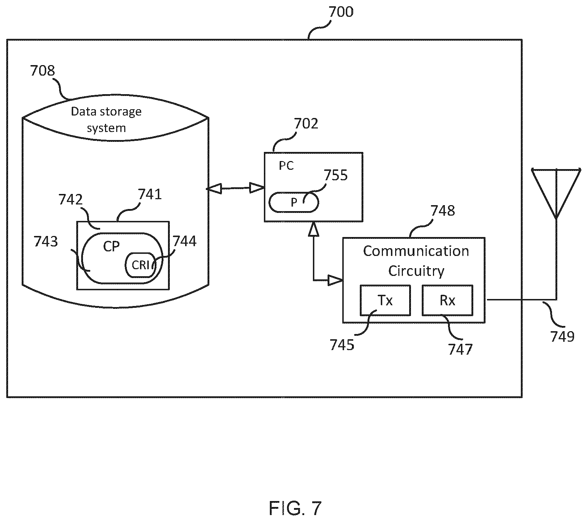

FIG. 7 is a block diagram of UE 104, according to some embodiments. As shown in FIG. 7, UE 104 may comprise: processing circuitry (PC) 702, which may include one or more processors (P) 755 (e.g., one or more general purpose microprocessors and/or one or more other processors, such as an application specific integrated circuit (ASIC), field-programmable gate arrays (FPGAs), and the like); communication circuitry 748, which is coupled to an antenna arrangement 749 comprising one or more antennas and which comprises a transmitter (Tx) 745 and a receiver (Rx) 747 for enabling UE 104 to transmit data and receive data (e.g., wirelessly transmit/receive data); and a local storage unit (a.k.a., "data storage system") 708, which may include one or more non-volatile storage devices and/or one or more volatile storage devices. In embodiments where PC 702 includes a programmable processor, a computer program product (CPP) 741 may be provided. CPP 741 includes a computer readable medium (CRM) 742 storing a computer program (CP) 743 comprising computer readable instructions (CRI) 744. CRM 742 may be a non-transitory computer readable medium, such as, magnetic media (e.g., a hard disk), optical media, memory devices (e.g., random access memory, flash memory), and the like. In some embodiments, the CRI 744 of computer program 743 is configured such that when executed by PC 702, the CRI causes UE 104 to perform steps described herein (e.g., steps described herein with reference to the flow charts). In other embodiments, UE 104 may be configured to perform steps described herein without the need for code. That is, for example, PC 702 may consist merely of one or more ASICs. Hence, the features of the embodiments described herein may be implemented in hardware and/or software.

While various embodiments are described herein, it should be understood that they have been presented by way of example only, and not limitation. Thus, the breadth and scope of this disclosure should not be limited by any of the above described exemplary embodiments. Moreover, any combination of the above-described elements in all possible variations thereof is encompassed by the disclosure unless otherwise indicated herein or otherwise clearly contradicted by context.

As used herein transmitting a message "to" or "toward" an intended recipient encompasses transmitting the message directly to the intended recipient or transmitting the message indirectly to the intended recipient (i.e., one or more other nodes are used to relay the message from the source node to the intended recipient). Likewise, as used herein receiving a message "from" a sender encompasses receiving the message directly from the sender or indirectly from the sender (i.e., one or more nodes are used to relay the message from the sender to the receiving node). Further, as used herein "a" means "at least one" or "one or more."

Additionally, while the processes described above and illustrated in the drawings are shown as a sequence of steps, this was done solely for the sake of illustration. Accordingly, it is contemplated that some steps may be added, some steps may be omitted, the order of the steps may be re-arranged, and some steps may be performed in parallel.

## Claims

1. A method (400) comprising:
receiving (s402) a triggering message; and
based at least on receiving the triggering message, transmitting (s404) towards a user equipment, UE, a message related to a Protocol Data Unit, PDU, session, wherein
the message related to the PDU session indicates any one or more of:
i) that a particular functionality is applied to a part of traffic or all traffic in the PDU session;
ii) that 3rd Generation Partnership Project, 3GPP, access is needed for using a particular application or all applications mapped into the PDU session;
iii) that a reconnection to 5G System, 5GS, is needed for using a particular application or all applications mapped into the PDU session; or
iv) that non-3GPP access is allowed for using a particular application or all applications mapped into the PDU session only if one or more conditions are satisfied.

2. The method of claim 1, wherein the triggering message is transmitted by either an Access and Mobility Management Function, AMF, or a Policy Control Function, PCF.

3. The method of any one of claims 1-2, further comprising:
analyzing the triggering message; and
based on analyzing the triggering message, determining that traffic in the PDU session is related to Edge Computing, EC, wherein
the transmission of the message related to the PDU session is based on the determination that traffic in the PDU session is related to EC.

4. The method of any one of claims 1-3, further comprising:
analyzing the triggering message;
based on analyzing the triggering message, determining that traffic in the PDU session is related to Edge Computing, EC; and
as a result of determining that the traffic in the PDU session is related to EC, selecting an edge User Plan Function (UPF) for a given traffic.

5. The method of any one of claims 1-4, wherein in addition, the message related to the PDU session is transmitted towards an AMF.

6. The method of any one of claims 1-5, wherein the message related to the PDU session includes tunnel information needed for the re-connection.

7. A method (500) comprising:
receiving (s502) a message related to a Protocol Data Unit, PDU, session;
analyzing (s504) the message related to the PDU session; and
retrieving (s506) from the message related to the PDU session an indication which indicates any one or more of:
i) that a particular functionality is applied to a part of traffic or all traffic in the PDU session;
ii) that a 3rd Generation Partnership Project, 3GPP, access is needed for using a particular application or all applications mapped into the PDU session;
iii) that a reconnection to 5G System, 5GS, is needed for using a particular application or all applications mapped into the PDU session; or
iv) that a particular non-3GPP access or all non-3GPP accesses are allowed for using a particular application or all applications mapped into the PDU session only if one or more conditions are satisfied.

8. The method of claim 7, wherein the method is performed by a user equipment, UE.

9. The method of any one of claims 7-8, wherein the message related to the PDU session includes tunnel information needed for the re-connection.

10. The method of any one of claims 7-9, the method further comprising performing any one or more of the following actions:
(i) notifying any applications mapped into the PDU session that Edge Computing, EC, related functionality is applied to a part of the traffic or all traffic mapped into the PDU session;
(ii) prohibiting usage of a particular non-3GPP access or any non-3GPP access for a particular application;
(iii) prohibiting usage of a particular non-3GPP access or any non-3GPP access for a given PDU session;
(iv) whenever a non-3GPP access becomes active, setting up a tunnel to a User Plane Function, UPF, and directing application/PDU session traffic through the tunnel; or
(v) monitoring performance of a first non-3GPP access and allowing a specific traffic to go through the first non-3GPP access only if one or more conditions related to the first non-3GPP access are satisfied.

11. A computer program (643 or 743) comprising instructions (644 or 744) which when executed by processing circuitry (602 or 702) cause the processing circuitry to perform the method of any one of claims 1-10.

12. An apparatus (600) being configured to:
receive (s402) a triggering message; and
based at least on receiving the triggering message, transmit (s404) towards a user equipment, UE, a message related to a Protocol Data Unit, PDU, session, wherein
the message related to the PDU session indicates any one or more of the following:
i) that a particular functionality is applied to a part of traffic or all traffic in the PDU session;
ii) that 3rd Generation Partnership Project, 3GPP, access is needed for using a particular application or all applications mapped into the PDU session;
iii) that a reconnection to 5G System, 5GS, is needed for using a particular application or all applications mapped into the PDU session; or
iv) that non-3GPP access is allowed for using a particular application or all applications mapped into the PDU session only if one or more conditions are satisfied.

13. The apparatus of claim 12, wherein the apparatus is further configured to perform the method of any one of claims 2-6.

14. An apparatus (700) being configured to:
receive (s502) a message related to a Protocol Data Unit, PDU, session;
analyze (s504) the message related to the PDU session; and
retrieve (s506) from the message related to the PDU session an indication which indicates any one or more of the following:
i) that a particular functionality is applied to a part of traffic or all traffic in the PDU session;
ii) that a 3rd Generation Partnership Project, 3GPP, access is needed for using a particular application or all applications mapped into the PDU session;
iii) that a reconnection to 5G System, 5GS, is needed for using a particular application or all applications mapped into the PDU session; or
iv) that a particular non-3GPP access or all non-3GPP accesses are allowed for using a particular application or all applications mapped into the PDU session only if one or more conditions are satisfied.

15. The apparatus of claim 14, wherein the apparatus is further configured to perform the method of any one of claims 8-10.

## Patentansprüche

1. Verfahren (400), umfassend:
Empfangen (s402) einer Auslösenachricht; und
zumindest basierend auf dem Empfangen der Auslösenachricht Senden (s404) einer Nachricht in Bezug auf eine Protokolldateneinheitssitzung, PDU-Sitzung, an eine Benutzereinrichtung, UE, wobei
die Nachricht in Bezug auf die PDU-Sitzung eines oder mehreres von Folgendem angibt:
i) dass eine spezifische Funktionalität auf einen Teil des Verkehrs oder den gesamten Verkehr in der PDU-Sitzung angewendet wird;
ii) dass 3rd Generation Partnership Project-Zugriff, 3GPP-Zugriff, erforderlich ist, um eine spezifische Anwendung oder alle Anwendungen zu verwenden, die der PDU-Sitzung zugeordnet sind;
iii) dass Wiederherstellung einer Verbindung zu einem 5G-System, 5GS, erforderlich ist, um eine spezifische Anwendung oder alle Anwendungen zu verwenden, die der PDU-Sitzung zugeordnet sind; oder
iv) dass Nicht-3GPP-Zugriff zum Verwenden einer spezifischen Anwendung oder aller Anwendungen, die der PDU-Sitzung zugeordnet sind, nur dann zulässig ist, wenn eine oder mehrere Bedingungen erfüllt sind.

2. Verfahren nach Anspruch 1, wobei die Auslösenachricht entweder von einer Zugangs- und Mobilitätsverwaltungsfunktion, AMF, oder einer Richtlinienkontrollfunktion, PCF, gesendet wird.

3. Verfahren nach einem der Ansprüche 1-2, ferner umfassend:
Analysieren der Auslösenachricht; und
basierend auf dem Analysieren der Auslösenachricht Bestimmen, dass Verkehr in der PDU-Sitzung mit Edge Computing, EC, in Beziehung steht, wobei
die Übertragung der Nachricht in Bezug auf die PDU-Sitzung auf der Bestimmung basiert, dass der Verkehr in der PDU-Sitzung mit EC in Beziehung steht.

4. Verfahren nach einem der Ansprüche 1-3, ferner umfassend:
Analysieren der Auslösenachricht; und
basierend auf dem Analysieren der Auslösenachricht Bestimmen, dass Verkehr in der PDU-Sitzung mit Edge Computing, EC, in Beziehung steht; und
als Ergebnis des Bestimmens, dass der Verkehr in der PDU mit EC in Beziehung steht, Auswählen einer Edge-Benutzerebenenfunktion (Edge-UPF) für einen gegebenen Verkehr.

5. Verfahren nach einem der Ansprüche 1-4, wobei die Nachricht in Bezug auf die PDU-Sitzung außerdem an eine AMF gesendet wird.

6. Verfahren nach einem der Ansprüche 1-5, wobei die Nachricht in Bezug auf die PDU-Sitzung Tunnelinformationen umfasst, die für die Verbindungswiederherstellung erforderlich sind.

7. Verfahren (500), umfassend:
Empfangen (s502) einer Nachricht in Bezug auf eine Protokolldateneinheitssitzung, PDU-Sitzung;
Analysieren (s504) der Nachricht in Bezug auf die PDU-Sitzung; und
Abrufen (s506) einer Angabe aus der Nachricht in Bezug auf die PDU-Sitzung, die eines oder mehreres von Folgendem angibt:
i) dass eine spezifische Funktionalität auf einen Teil des Verkehrs oder den gesamten Verkehr in der PDU-Sitzung angewendet wird;
ii) dass 3rd Generation Partnership Project-Zugriff, 3GPP-Zugriff, erforderlich ist, um eine spezifische Anwendung oder alle Anwendungen zu verwenden, die der PDU-Sitzung zugeordnet sind;
iii) dass Wiederherstellung einer Verbindung zu einem 5G-System, 5GS, erforderlich ist, um eine spezifische Anwendung oder alle Anwendungen zu verwenden, die der PDU-Sitzung zugeordnet sind; oder
iv) dass Nicht-3GPP-Zugriff zum Verwenden einer spezifischen Anwendung oder aller Anwendungen, die der PDU-Sitzung zugeordnet sind, nur dann zulässig ist, wenn eine oder mehrere Bedingungen erfüllt sind.

8. Verfahren nach Anspruch 7, wobei das Verfahren von einer Benutzereinrichtung, UE, durchgeführt wird.

9. Verfahren nach einem der Ansprüche 7-8, wobei die Nachricht in Bezug auf die PDU-Sitzung Tunnelinformationen umfasst, die für die Verbindungswiederherstellung erforderlich sind.

10. Verfahren nach einem der Ansprüche 7-9, wobei das Verfahren ferner Durchführen einer oder mehrerer der folgenden Aktionen umfasst:
(i) Benachrichtigen aller Anwendungen, die der PDU-Sitzung zugeordnet sind, dass Edge-Computingbezogene, EC-bezogene, Funktionalität auf einen Teil des Verkehrs oder den gesamten Verkehr angewendet wird, der der PDU-Sitzung zugeordnet ist;
(ii) Verbieten der Nutzung eines spezifischen Nicht-3GPP-Zugriffs oder jedes Nicht-3GPP-Zugriffs für eine spezifische Anwendung;
(iii) Verbieten der Nutzung eines spezifischen Nicht-3GPP-Zugriffs oder jedes Nicht-3GPP-Zugriffs für eine gegebene PDU-Sitzung;
(iv) wann immer ein Nicht-3GPP-Zugriff aktiv wird, Einrichten eines Tunnels zu einer Benutzerebenenfunktion, UPF, und Leiten von Anwendungs-/PDU-Sitzungsverkehr durch den Tunnel; oder
(v) Überwachen der Leistung eines ersten Nicht-3GPP-Zugriffs und Zulassen eines spezifischen Verkehrs über den ersten Nicht-3GPP-Zugriff nur dann, wenn eine oder mehrere Bedingungen in Bezug auf den ersten Nicht-3GPP-Zugriff erfüllt sind.

11. Computerprogramm (643 oder 743), umfassend Anweisungen (644 oder 744), die bei Ausführung durch Verarbeitungsschaltungsanordnung (602 oder 702) die Verarbeitungsschaltungsanordnung zum Durchführen des Verfahrens nach einem der Ansprüche 1-10 veranlassen.

12. Vorrichtung (600), die zu Folgendem konfiguriert ist:
Empfangen (s402) einer Auslösenachricht; und
zumindest basierend auf dem Empfangen der Auslösenachricht Senden (s404) einer Nachricht in Bezug auf eine Protokolldateneinheitssitzung, PDU-Sitzung, an eine Benutzereinrichtung, UE, wobei
die Nachricht in Bezug auf die PDU-Sitzung eines oder mehreres von Folgendem angibt:
i) dass eine spezifische Funktionalität auf einen Teil des Verkehrs oder den gesamten Verkehr in der PDU-Sitzung angewendet wird;
ii) dass 3rd Generation Partnership Project-Zugriff, 3GPP-Zugriff, erforderlich ist, um eine spezifische Anwendung oder alle Anwendungen zu verwenden, die der PDU-Sitzung zugeordnet sind;
iii) dass Wiederherstellung einer Verbindung zu einem 5G-System, 5GS, erforderlich ist, um eine spezifische Anwendung oder alle Anwendungen zu verwenden, die der PDU-Sitzung zugeordnet sind; oder
iv) dass Nicht-3GPP-Zugriff zum Verwenden einer spezifischen Anwendung oder aller Anwendungen, die der PDU-Sitzung zugeordnet sind, nur dann zulässig ist, wenn eine oder mehrere Bedingungen erfüllt sind.

13. Vorrichtung nach Anspruch 12, wobei die Vorrichtung ferner zum Durchführen des Verfahrens nach einem der Ansprüche 2-6 konfiguriert ist.

14. Vorrichtung (700), die zu Folgendem konfiguriert ist:
Empfangen (s502) einer Nachricht in Bezug auf eine Protokolldateneinheitssitzung, PDU-Sitzung;
Analysieren (s504) der Nachricht in Bezug auf die PDU-Sitzung; und
Abrufen (s506) einer Angabe aus der Nachricht in Bezug auf die PDU-Sitzung, die eines oder mehreres von Folgendem angibt:
i) dass eine spezifische Funktionalität auf einen Teil des Verkehrs oder den gesamten Verkehr in der PDU-Sitzung angewendet wird;
ii) dass 3rd Generation Partnership Project-Zugriff, 3GPP-Zugriff, erforderlich ist, um eine spezifische Anwendung oder alle Anwendungen zu verwenden, die der PDU-Sitzung zugeordnet sind;
iii) dass Wiederherstellung einer Verbindung zu einem 5G-System, 5GS, erforderlich ist, um eine spezifische Anwendung oder alle Anwendungen zu verwenden, die der PDU-Sitzung zugeordnet sind; oder
iv) dass Nicht-3GPP-Zugriff zum Verwenden einer spezifischen Anwendung oder aller Anwendungen, die der PDU-Sitzung zugeordnet sind, nur dann zulässig ist, wenn eine oder mehrere Bedingungen erfüllt sind.

15. Vorrichtung nach Anspruch 14, wobei die Vorrichtung ferner zum Durchführen des Verfahrens nach einem der Ansprüche 8-10 konfiguriert ist.

## Revendications

1. Procédé (400) comprenant :
la réception (s402) d'un message de déclenchement ; et sur la base au moins de la réception du message de déclenchement, la transmission (s404), vers un équipement utilisateur, UE, d'un message lié à la session d'unité de données de protocole, PDU, dans lequel
le message lié à la session PDU indique un ou plusieurs parmi :
i) qu'une fonctionnalité particulière est appliquée à une partie de trafic ou à tout le trafic dans la session PDU ;
ii) qu'un accès de Projet de partenariat de 3ème génération, 3GPP, est nécessaire pour utiliser une application particulière ou toutes les applications mappées dans la session PDU ;
iii) qu'une reconnexion à un système 5G, 5GS, est nécessaire pour utiliser une application particulière ou toutes les applications mappées dans la session PDU ; ou
iv) qu'un accès non-3GPP est autorisé pour utiliser une application particulière ou toutes les applications mappées dans la session PDU uniquement si une ou plusieurs conditions sont remplies.

2. Procédé selon la revendication 1, dans lequel le message de déclenchement est transmis soit par une fonction de gestion d'accès et de mobilité, AMF, soit par une fonction de commande de politique, PCF.

3. Procédé selon l'une quelconque des revendications 1 et 2, comprenant en outre :
l'analyse du message de déclenchement ; et
sur la base de l'analyse du message de déclenchement, la détermination qu'un trafic dans la session PDU est lié à l'Edge Computing, EC, dans lequel la transmission du message lié à la session PDU est sur la base de la détermination qu'un trafic dans la session PDU est lié à l'EC.

4. Procédé selon l'une quelconque des revendications 1 à 3, comprenant en outre :
l'analyse du message de déclenchement ;
sur la base de l'analyse du message de déclenchement, la détermination qu'un trafic dans la session PDU est lié à l'Edge Computing, EC ; et
en réponse à la détermination que le trafic dans la session PDU est lié à l'EC, la sélection d'une fonction de plan utilisateur (UPF) de périphérie pour un trafic donné.

5. Procédé selon l'une quelconque des revendications 1 à 4, dans lequel, en complément, le message lié à la session PDU est transmis vers une AMF.

6. Procédé selon l'une quelconque des revendications 1 à 5, dans lequel le message lié à la session PDU inclut des informations de tunnel nécessaires pour la reconnexion.

7. Procédé (500) comprenant :
la réception (s502) d'un message lié à une session d'unité de données de protocole, PDU ;
l'analyse (s504) du message lié à la session PDU ; et la récupération (s506), à partir du message lié à la session PDU, d'une indication qui indique un ou plusieurs parmi :
i) qu'une fonctionnalité particulière est appliquée à une partie de trafic ou à tout le trafic dans la session PDU ;
ii) qu'un accès de Projet de partenariat de 3ème génération, 3GPP, est nécessaire pour utiliser une application particulière ou toutes les applications mappées dans la session PDU ;
iii) qu'une reconnexion à un système 5G, 5GS, est nécessaire pour utiliser une application particulière ou toutes les applications mappées dans la session PDU ; ou
iv) qu'un accès non-3GPP particulier ou que tous les accès non-3GPP sont autorisés pour utiliser une application particulière ou toutes les applications mappées dans la session PDU uniquement si une ou plusieurs conditions sont remplies.

8. Procédé selon la revendication 7, dans lequel le procédé est réalisé par un équipement utilisateur, UE.

9. Procédé selon l'une quelconque des revendications 7 et 8, dans lequel le message lié à la session PDU inclut des informations de tunnel nécessaires pour la reconnexion.

10. Procédé selon l'une quelconque des revendications 7 à 9, le procédé comprenant en outre la réalisation d'une ou plusieurs des actions suivantes :
i) la notification de toute application mappée dans la session PDU qu'une fonctionnalité liée à l'Edge Computing, EC, est appliquée à une partie du trafic ou à tout le trafic mappé dans la session PDU ;
ii) l'interdiction d'utilisation d'un accès non-3GPP particulier ou de tout accès non-3GPP pour une application particulière ;
iii) l'interdiction d'utilisation d'un accès non-3GPP particulier ou de tout accès non-3GPP pour une session PDU donnée ;
iv) lorsqu'un accès non-3GPP devient actif, l'établissement d'un tunnel vers une fonction de plan utilisateur, UPF, et la direction d'un trafic d'application/de session PDU à travers le tunnel ; ou
v) la surveillance de performances d'un premier accès non-3GPP et l'autorisation à un trafic spécifique de passer par le premier accès non-3GPP uniquement si une ou plusieurs conditions liées au premier accès non-3GPP sont remplies.

11. Programme informatique (643 ou 743) comprenant des instructions (644 ou 744) qui, lorsqu'elles sont exécutées par une circuiterie de traitement (602 ou 702), amènent la circuiterie de traitement à réaliser le procédé selon l'une quelconque des revendications 1 à 10.

12. Appareil (600) étant configuré pour :
recevoir (s402) un message de déclenchement ; et
sur la base au moins de la réception du message de déclenchement, transmettre (s404), vers un équipement utilisateur, UE, un message lié à une session d'unité de données de protocole, PDU, dans lequel
le message lié à la session PDU indique un ou plusieurs parmi :
i) qu'une fonctionnalité particulière est appliquée à une partie de trafic ou à tout le trafic dans la session PDU ;
ii) qu'un accès de Projet de partenariat de 3ème génération, 3GPP, est nécessaire pour utiliser une application particulière ou toutes les applications mappées dans la session PDU ;
iii) qu'une reconnexion à un système 5G, 5GS, est nécessaire pour utiliser une application particulière ou toutes les applications mappées dans la session PDU ; ou
iv) qu'un accès non-3GPP est autorisé pour utiliser une application particulière ou toutes les applications mappées dans la session PDU uniquement si une ou plusieurs conditions sont remplies.

13. Appareil selon la revendication 12, dans lequel l'appareil est en outre configuré pour réaliser le procédé selon l'une quelconque des revendications 2 à 6.

14. Appareil (700) étant configuré pour :
recevoir (s502) un message lié à une session d'unité de données de protocole, PDU ;
analyser (s504) le message lié à la session PDU ; et récupérer (s506), à partir du message lié à la session PDU, une indication qui indique un ou plusieurs parmi :
i) qu'une fonctionnalité particulière est appliquée à une partie de trafic ou à tout le trafic dans la session PDU ;
ii) qu'un accès de Projet de partenariat de 3ème génération, 3GPP, est nécessaire pour utiliser une application particulière ou toutes les applications mappées dans la session PDU ;
iii) qu'une reconnexion à un système 5G, 5GS, est nécessaire pour utiliser une application particulière ou toutes les applications mappées dans la session PDU ; ou
iv) qu'un accès non-3GPP particulier ou que tous les accès non-3GPP sont autorisés pour utiliser une application particulière ou toutes les applications mappées dans la session PDU uniquement si une ou plusieurs conditions sont remplies.

15. Appareil selon la revendication 14, dans lequel l'appareil est en outre configuré pour réaliser le procédé selon l'une quelconque des revendications 8 à 10.
